# EUROPEAN PATENT APPLICATION

(11) **EP 0 962 747 A2**
(43) Date of publication of application: **08.12.1999**
(21) Application number: 99830327.5
(22) Date of filing: 27.05.1999
(51) Int. Cl.: G01C 15/00

(54) **Remote control automated theodolite**

(30) Priority: 01.06.1998 IT MI981205
(71) Applicant: Federico, Demetrio, 87068 Rossano Scalo (CS) (IT)
(72) Inventor: Federico, Demetrio, 87068 Rossano Scalo (CS) (IT)

(57) **Abstract**

The essential content of the present invention is a revolving Instrument, broadcasting and receiving a laser beam,sliding inside a container which is fixed to a pole.

It can be controlled through a cable or other telematic means by a control station and it's able to survey the stability or the variations of settled points whereon some reflecting plates are applied.

It is provided with a memory card containing the original position data and it's able to survey its own stability and the plates'one.

From the complete surveying data, transmitted to the control station,a precise graph of the settled points is obtained; through the superimposition of the original position graph their stability can be checked.

The absence of a skilled operator, manually working,makes possible survey the data at every hour of day and night.

This device,which involves high new technology ,can be immediately used in controlling the railway stability, especially on curvilinear trajectories,above all for the high speed trains which need a precise continuos control.

Besides, since the automated instrument works thanks to a control station placed at a very great distance,it will be possible to check a whole stretch or a whole railway line.

The structure can be immediately used not only for high speed trains railways, but for landscape monitorage too,and other different purposes and fields of activity..

It's the same for places where,being necessary a continuos control,the presence of a skilled operator is difficult to achieve.

## Description

The present invention refers to Physics,class G 02,and Electricity,class H 04.

The current technique involves the use of a theodolite which must be manually set by a skilled operator in order to survey technical data.

The object of the present industrial invention is a remote controlled automated theodolite.

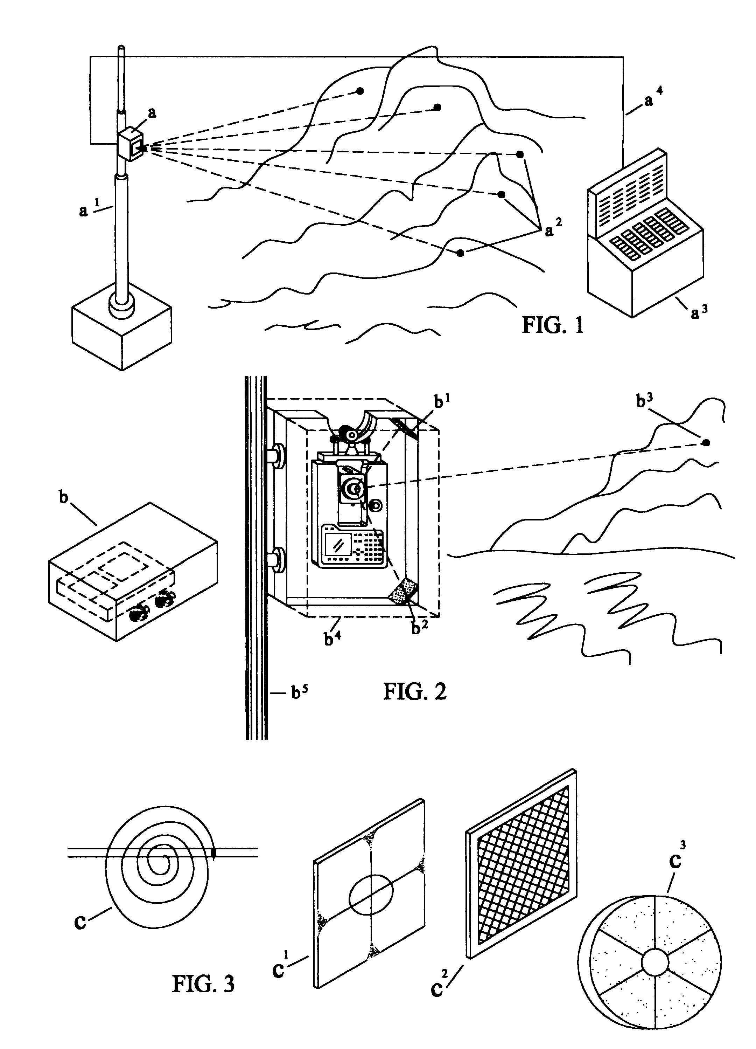

The structure of the device is composed of: a broadcasting-receiving laser instrument, revolving on its own axle, hanging and sliding inside a container ,(1/3,Fig.1,a), which has been fastened to a stake at a prefixed height (1/3,Fig,1,a1);several reflecting plates,placed at predetermined settled points in the range of the revolving device (1/3,Fig.1,a2); a control station (1/3,Fig.1,a3) connected to the instrument by a cable (1/3,Fig,1,a4) or by other telematic devices.

The whole system has been created to survey the stability or the spatial variations of the settled reflecting plates,at any hour of the day. The peculiarity of the invention is to have made possible the automation for the movements of the receiving-broadcasting laser device,while working.

This instrument, highly sophisticated, when it starts to worl under the signal of the control station, in relation to the former spatial data - stored in a memory card incorporated in the same device (1/3,Fig.2,b)- before to proceed in testing the stability of the reflecting plates, it checks its own position to the previous one.

To do this it emits the laser beam towards two different reflecting spots situated on the inner side of the container (1/3,Fig.2,b1,b2) and towards another steady reflecting spot on the outer side (1/3,Fig.2,b3).

This first step is absolutely necessary to measure with a sharp precision the possible accidental moving of the stake and consequently of the hanging container (1/3,Fig.2,b4,b5), and then to proceed correcting the former coordinates which will be used to control the stability of the outer reflecting plates.

As a metter of fact a double axis sensor has been incorporated to check continuosly the vertical axis inclination from both directions, to calculate the compensation values and automatically correct horizontal and vertical angles.

Having its own position been put right,the instrument,provided with a special sensor,will emit a laser beam which tries to find the reflecting plate through a spiral movement and to set it in the right position (1/3,Fig.3,c).

According to their different distances,indeed,several targets or reflectors or reflecting prisms have been previously applied (1/3,Fig.3,c1,c2,c3).

The most sophisticated theodolites actually used operate with reflecting microprism targets whose adhesive support allows a simple application upon every object. A great choice of models and dimensions satisfies every specific demand.

The most technically advanced device actually used, which will be adapted to our structure and then utilized, entails a new optical both system-contrary to conventional ones-which lines up on the same axis both the broadcasting and receiving laser beams.

This technical device allows the use,besides the traditional crystal reflecting prisms,of adhesive reflecting targets,with the guarantee of maximum precision in measurement.

Inside the conventional instruments the telescope lens is divided in two parts: up and down, or left and right. One is for the emitting beam,the other for the receiving one.

This system often causes errors when the target is not perpendicular to the measure ray. The problem has been solved making exactly co-axial both the broadcasting and the receiving beams.

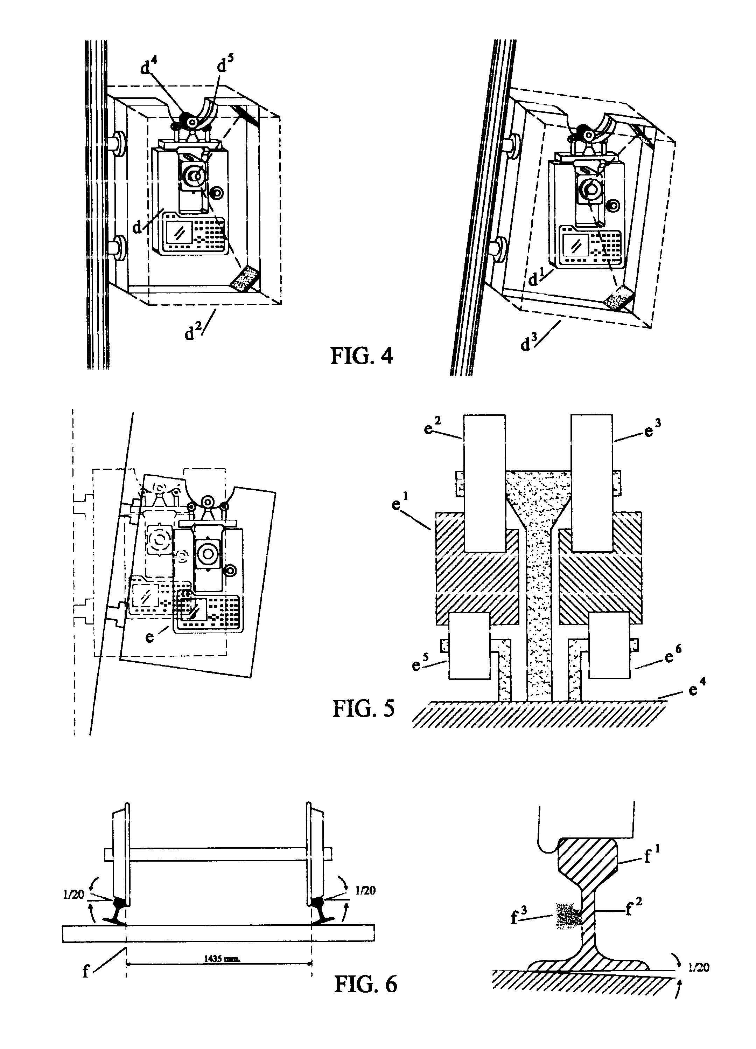

Besides, the essential of the invention is the stability of the revolving device's vertical trim (2/3,Fig.4,d,d1) inside the container (1/3,Fig.4,d2,d3).

It is linked to inner side of the container by two sliding pads (2/3,Fig.4,d4) on a semicircled guide (2/3,Fig.4,d5) in order to have a vertical trim,anyway (2/3,Fig.5,e).

The guide,provided with two lateral shoulders (2/3,Fig.5,e1), whereon the two pads slide (2/3,Fig.5,e2,e3),prevents every revolving movement of the instrument's fixed component (2/3,Fig.5,e4).

In fact,the whole device's gravitational weight assisted by two castors connected to the guide on the outside ( 2/3, Fig.5, e5,e6), forbids every swinging movement to the working instrument.

The instrument,furthermore, is not subjected to the swinging movements due to athmospheric and external troubles,because it's placed inside the container fixed to the pole.

However,if it will practically persist any doubt for casual swinging movements, the use of an electro-magnet,switched on and controlled by the same starting impulse for the automated theodolite, will block the guide's sliding pads making every rotary and/or swinging instrument's movement impossible while working.

A possible construction of this structure,in accordance with the invention,is puposed to the continuos control of the railway's stability, especially on the curvilinear trajectories.A kind of control more than necessary to ensure the safety for the transit of high speed trains.

The Figure n°6 (2/3) shows the railway gauge used in Europe (f),the rail section (f1),the soul of the same (f2),and then the application of the reflecting plate upon the same rail (f3);

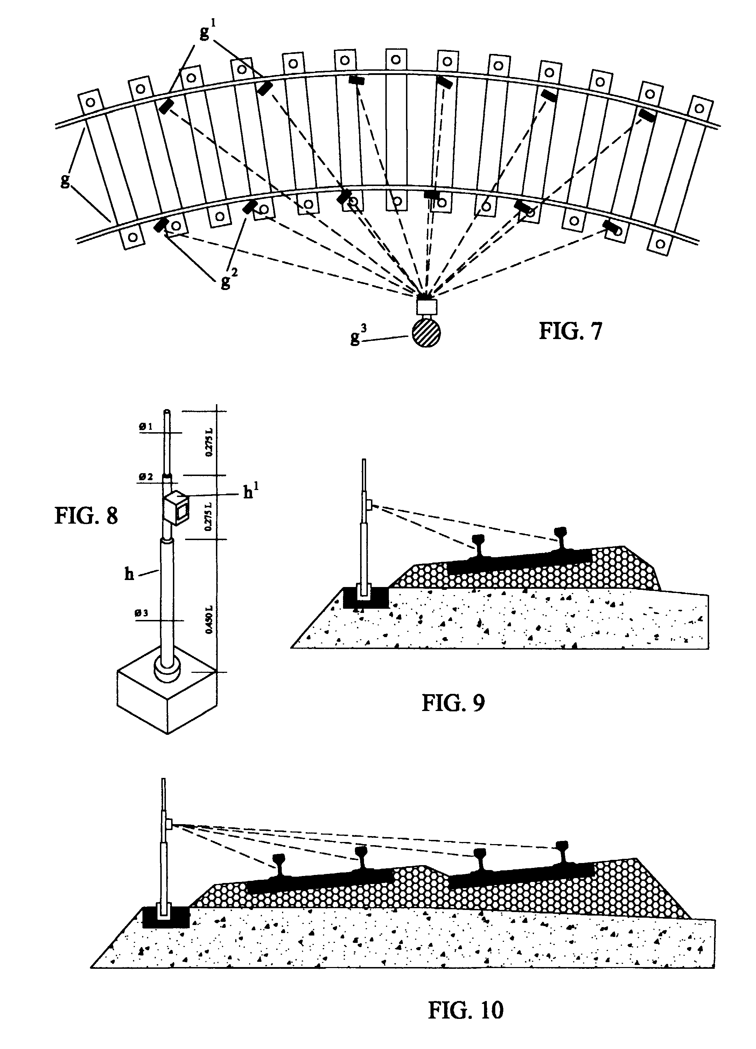

The Figure n°7 (3/3) shows some rails on a curvilinear trajectory (g) whereon several plates (g1,g2) have been welded to the rail soul at predetermined points (usually every ten meters); on the plates targets, reflectors or prisms are applied according to the distance, able to reflect the laser beam emitted by the instrument anchored to the pole (g3);

The Figure n°8 (3/3) shows a Manesmann pole,used by Italian Rails (h),where the container (h1) for the broadcasting-receiving laser beam instrument is hanging at a 5 meter height;

The Figure n°9 (3/3),shows the perspective of the structure for the control of a sole rail on a curvilinear trajectory;

The Figure n°10 (3/3),shows the same structure for the control of two rails on a curvilinear trajectory.

The construction,of course,of the structure could be different for size,forms and materials according to the requirements even in different fields of activity, with no risks for the validity of the present invention.

## Claims

1. Structure composed of : a revolving instrument, broadcasting and receiving a laser beam, hooked to a trolley inside a container fixed at a predetermined height to a pole or other steady support; one or more plates reflecting the laser beam, applied to settled pointds; a control station, connected to the device by a cable or other telematic means; characterized in that: the instrument switched on by the station and provided with memory cards containing the origine coordinates, first of all checks his own position emitting the laser beam towards two reflecting spots placed inside the container where it has been hooked andtowards another outside far point; if there's a mismatch, after the correction of the former data, it surveys the stability of the plates applied to determined outside points, trasmitting the new data to the control station.

2. Structure as the claim 1.,characterized in that: the instrument always keeps a vertical trim during the trolley sliding,whereon it has been hooked up,on a semicircular guide.

3. Structure as the claims 1. and 2., characterized in that: the steady component whereon the instrument has ben hooked up, is not subjected neither to rotary movements thanks to the shoulders of the guide where the trolley slides, nor to swinging movements both because the atmospheric or other font troubles happen outside the container and because of the whole structure's weight, and because of two castors in the steady component which are opposed by side to the trolley's pads, upon the wall opposite the guide.

4. Structure as the claims 1.,2. and 3., characterized in that: an electro-magnet, able to block the trolley on the guide, whenever the instrument is switched on by the control station, forbids to its fixed components every revolving and swinging movement.

5. Structure as the claims from 1. to 4., characterized in that : being no more necessary the presence of a skilled operator to make the instrument work manually, as it has been automated by a remote control,the surveys can be taken at every hour of the day and night

6. Structure as the claims from 1. to 5., characterized in that : it can be immediately used for the control of the railway's stability through the application of the reflecting plates on their soul. It can be especially used in curvilinear trajectories for the transit of high speed trains.

7. Structure as the claims from 1. to 6., characterized in that : the possibility to operate a day and a night control and that more than one structure can be managed by only one station.

8. Structure as the claims from 1. to 7., characterized in that : the possibility to use it in landscape monitoring and in all other fields of activity where the manual control is difficult to achieve or a night control is needed.

9. Structure as the claims from 1. to 7., characterized in that : that constructing variations can be operated, with different sizes, forms and materials,according to different requirements, with no risks for the technical validity of the present invention.
